(19) Europäisches Patentamt
European Patent Office
Office européen des brevets

(11) **EP 1 833 730 B1**

(12) **FASCICULE DE BREVET EUROPEEN**

(45) Date de publication et mention
de la délivrance du brevet:
**15.07.2009 Bulletin 2009/29**

(51) Int Cl.:
***B65D 35/10*** *(2006.01)*     ***B29D 23/20*** *(2006.01)*
***B29C 53/42*** *(2006.01)*     ***B29C 31/00*** *(2006.01)*

(21) Numéro de dépôt: **05826530.7**

(22) Date de dépôt: **27.12.2005**

(86) Numéro de dépôt international:
**PCT/IB2005/054405**

(87) Numéro de publication internationale:
**WO 2006/072865 (13.07.2006 Gazette 2006/28)**

(54) **TUBE A SECTION OVALE, SON PROCEDE DE FABRICATION ET DISPOSITIF POUR SA MISE EN OEUVRE**

TUBE MIT NICHT KREISFÖRMIGEM QUERSCHNITT, IHR HERSTELLUNGSVERFAHREN UND VORRICHTUNG DAFÜR

TUBE WITH NON-CIRCULAR CROSS-SECTION, ITS MANUFACTURING METHOD AND APPARATUS THEREFOR

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **06.01.2005 EP 05100053**

(43) Date de publication de la demande:
**19.09.2007 Bulletin 2007/38**

(73) Titulaire: **Aisapack Holding SA**
**1896 Vouvry (CH)**

(72) Inventeurs:
• **KELLER, Gerhard**
**CH-1896 Vouvry (CH)**
• **ROY, Hugues-Vincent**
**CH-1896 Vouvry (CH)**

• **THOMASSET, Jacques**
**CH-1896 Vouvry (CH)**

(74) Mandataire: **Grosfillier, Philippe**
**Andre Roland S.A.**
**Avenue Tissot 15**
**P.O. Box 1255**
**1001 Lausanne (CH)**

(56) Documents cités:
| | |
|---|---|
| **DE-B- 1 143 630** | **FR-A- 2 224 364** |
| **FR-A- 2 540 073** | **FR-A- 2 702 738** |
| **FR-A- 2 856 981** | **GB-A- 773 172** |
| **US-A- 2 890 482** | **US-A- 2 913 768** |
| **US-A- 3 769 117** | **US-A- 4 200 482** |
| **US-A1- 2004 016 279** | |

**EP 1 833 730 B1**

**Description**

Domaine de l'invention

La présente invention se situe dans le domaine des emballages de forme tubulaire destinés à contenir, par exemple, de la pâte dentifrice, des produits cosmétiques ou alimentaires.
Plus précisément, elle se rapporte aux tubes à section ovale qui sont obtenus à partir d'un film laminé enroulé et soudé.

Etat de la technique

On connaît plusieurs procédés de fabrication de tubes souples dits " tubes laminés".
A titre d'exemple, on peut citer le brevet américain US 4 123 312 de Schmid & Jeker.
De manière générale, un tube laminé réalisé par assemblage de composants préfabriqués comprend les éléments suivants : une jupe, une tête et un bouchon.
La tête a sensiblement la forme d'un tronc de cône creux sur lequel se situe un cylindre formant le col étroit et dont la face externe peut être filetée afin de recevoir un bouchon qui vient s'y visser. Alternativement, la face externe du col étroit n'est pas filetée, le bouchon venant se fixer par simple pression. Généralement la tête et le bouchon sont des pièces plastiques réalisées par injection moulage ou compression moulage.
La jupe, une fois formée, a une forme sensiblement tubulaire. Elle est produite à partir de rouleaux de laminé mono- ou multicouche, avec ou sans feuille d'aluminium et imprimé ou vierge.
Un procédé courant de fabrication de tubes laminés comprend les étapes suivantes :

- A partir d'un rouleau de film laminé, on enroule et soude autour d'un mandrin de section circulaire un laminé de manière à former un tube cylindrique sans fin. Le cylindre est ensuite découpé en jupes de longueur déterminée.
- Les têtes et bouchons sont automatiquement chargés dans le dispositif.
- Les têtes sont fixées par soudage aux jupes.
- Les bouchons sont fixés sur les têtes.

Il existe aussi des procédés où un ou plusieurs éléments sont produits lors de l'assemblage.
La réalisation de tubes laminés par assemblage de composés préfabriqués offre l'avantage de pouvoir trier et éliminer les composants ne correspondant pas aux critères de qualité avant les étapes d'assemblage. Ainsi ce mode de réalisation de tubes laminés permet d'obtenir des tubes de meilleure qualité et avec des rendements supérieurs.
La plupart des têtes de tubes laminés de l'état de la technique se caractérisent par une section circulaire.

Les tubes laminés de l'état de la technique présentent cependant quelques inconvénients. Par exemple, lorsqu'ils sont disposés dans une surface commerciale, la surface de la jupe rendue visible au consommateur, c'est à dire la surface qui se présente directement à lui sans qu'il doive tourner le tube, est relativement petite.
Les documents brevets suivants décrivent des tubes de section non-circulaire :

FR-A-2856981, FR-A-2224364, US-A-2004/00162-79, DE-B-1143630 et FR-A-2702738.

Ces antériorités concernent cependant des tubes où la jupe comporte une soudure longitudinale disposée sur la face principale du tube, à savoir celle qui correspond à la zone de la section ovale de rayon de courbure maximal. Voir en particulier FR-A-2856981 et FR-A-2702738.
Dans ces cas, l'utilisation à des fins commerciales (information au consommateur) de l'une des surfaces principales du tube est donc entravée par la présence de la soudure longitudinale.
Il existe par conséquent un besoin de remédier au problème précité en offrant des surfaces principales de tubes totalement dépourvues de soudure.

Résumé de l'invention

La présente invention à le mérite de remédier notamment à l'inconvénient précité.
A cet effet, elle concerne un emballage souple de forme essentiellement tubulaire et destiné à contenir un produit semi-liquide ou pâteux qui sort sous la pression des doigts , ledit emballage comprenant une jupe, une tête et optionnellement un bouchon; la jupe étant formée d'une feuille enroulée et comporte une soudure longitudinale formée par le recouvrement de ses bords ; la tête étant fixée sur le pourtour de l'une des extrémités de la jupe et forme une section ovale au niveau de sa zone de fixation avec la jupe; ledit emballage étant caractérisé par le fait que l'extrémité de la soudure longitudinale qui est en contact avec la tête se situe à l'endroit, voire à proximité de l'endroit, où le rayon de courbure de ladite section ovale est minimal.
La présente invention concerne également un procédé, cf. revendication 5, et un dispositif, cf. revendication 12, permettant de réaliser l'emballage décrit précédemment.

Description détaillée de l'invention

L'invention sera mieux comprise ci-dessous au moyen d'un exemple de tube laminé possédant une tête avec section ovale, c'est-à-dire de forme ayant une courbure fermée et ayant deux diamètres inégaux.
L'exemple ci-dessous est illustré par les figures suivantes :

Figure 1      Présentation d'un tube selon l'invention.

Figure 2      Dessin de détail de la zone de soudure entre la jupe et la tête de tube.

Figure 3a     Vue dans le plan perpendiculaire à l'axe de la jupe de la zone de soudage entre la jupe et la tête de tube

Figure 3b     Dessin de détail de la zone de recouvrement du laminé formant la jupe.

Figure 4      Un 1er dispositif selon l'invention pour le formage et le transfert de la jupe sur un mandrin ovale.

Figure 5      Coupe selon l'axe AA du 1er dispositif selon l'invention présenté en figure 4.

Figure 6      Un 2e dispositif selon l'invention pour l'orientation de jupe sur un mandrin ovale.

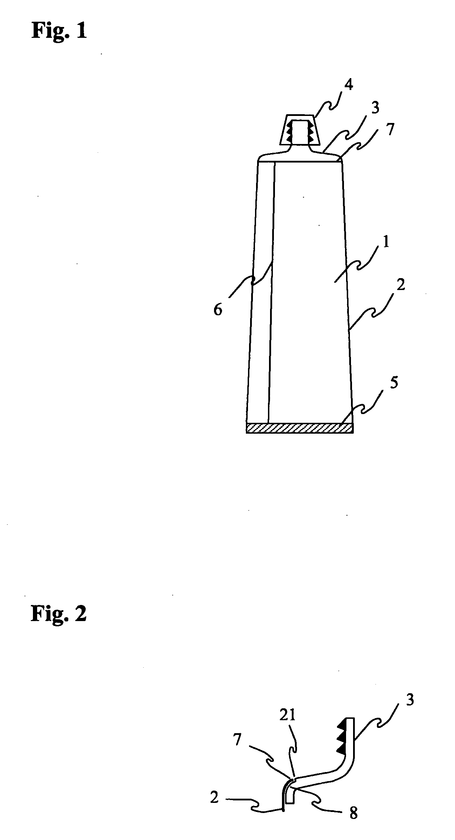

Le tube laminé **1** illustré sur la figure **1** se compose d'une jupe **2,** d'une tête **3** et d'un bouchon **4**; une fermeture plate **5** étant formée vers l'extrémité du tube **1** qui est opposée à celle où se situe le bouchon **4**. La jupe **2** comporte une soudure longitudinale **6** sur toute sa longueur. La jupe **2** est soudée à la tête **3** sur tout son extrémité supérieure **7**.

La figure 2 présente de manière détaillée la zone de soudure entre la jupe **2** et la tête de tube **3**. La jupe **2** recouvre la tête **3** sur une zone **8** ayant un rayon de courbure R. Cette zone est délimitée en sa partie supérieure par un décrochement **21** permettant de positionner la jupe **2**. Pour des raisons esthétiques, il est préférable de veiller à ce que l'extrémité supérieure 7 de la jupe soit située dans un plan perpendiculaire à l'axe de la jupe cylindrique. Ceci peut être réalisé en veillant à ce que le rayon de courbure de cette zone de recouvrement **8** ait une valeur constante sur tout le pourtour de la tête de tube et à ce que le décrochement **21** soit bien dans un plan perpendiculaire à l'axe de la jupe **2**.

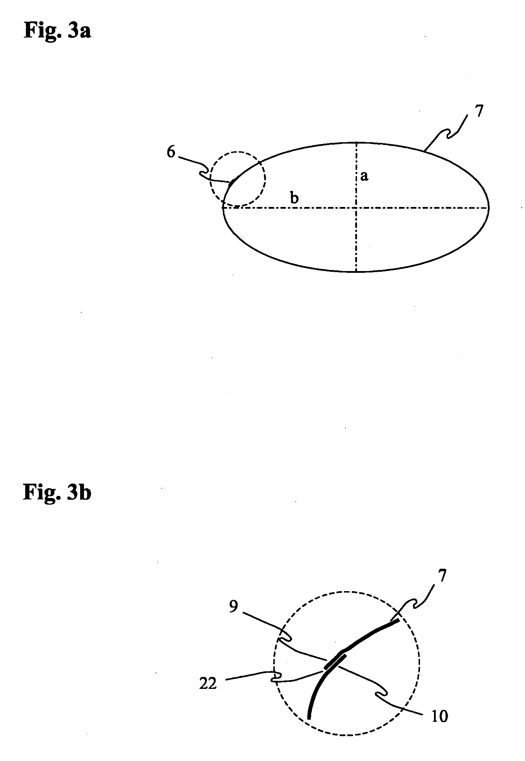

La figure 3a présente une vue de l'extrémité de la jupe **7** dans un plan perpendiculaire à l'axe de la jupe. Dans la figure 3a, la tête de l'emballage selon l'invention a une section ovale caractérisé par un demi-petit axe **a** et un demi-grand axe **b.** La soudure longitudinale de la jupe **6** est détaillée sur la figure 3b. Cette soudure est composée d'une zone de recouvrement comportant la partie soudée du laminé supérieur **9** et la partie soudée du laminé inférieur **10**. L'extrémité du laminé supérieur **9** délimite la zone visible **22** de la soudure longitudinale.

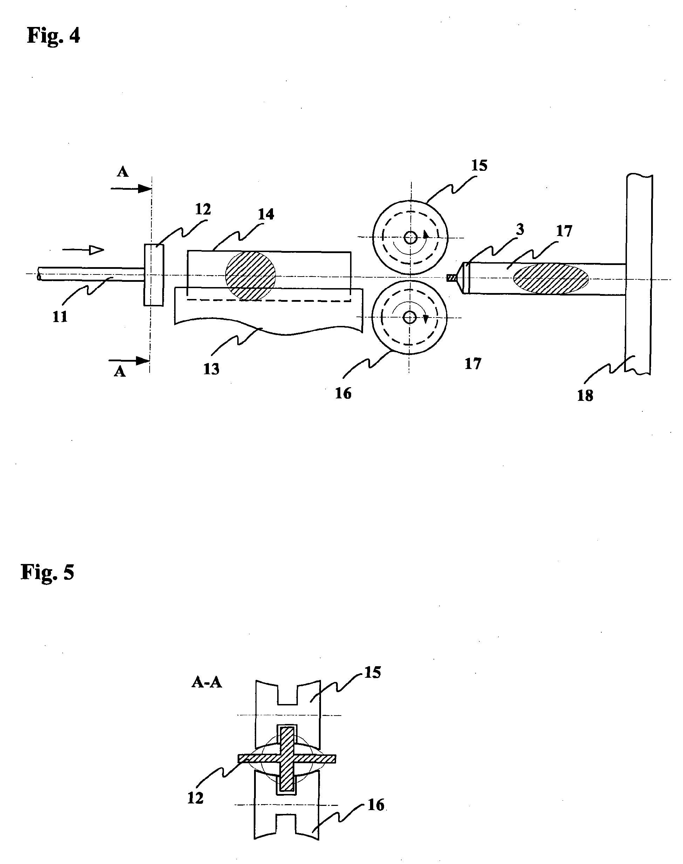

La figure 4 présente un exemple de partie de dispositif permettant de former des tubes laminés ovales selon l'invention. Cette partie concerne le point particulièrement critique du formage de la jupe ovale **2** à partir de jupe circulaire **14 ,** ainsi que le transfert de cette jupe ovale **2** sur un mandrin ovale **17**. Le dispositif est constitué d'un poussoir de jupe **11** ayant une tête de poussoir **12** en forme de croix dont les branches sont inégales, d'un support concave **13** équipé de moyens appropriés pour maintenir la jupe en position (tels qu'un système vacuum), de rouleaux de formage **15,16** tournant selon un axe perpendiculaire à la feuille et d'un mandrin 17 positionné sur un support de mandrin **18**.

La figure 5 présente une coupe selon le plan A-A de la tête de poussoir **12**. Cette tête de poussoir **12** est en forme de croix dont les branches sont de longueurs inégales de manière à pouvoir passer entre les deux rouleaux de formage **15,16**. Les branches de cette tête de poussoir **12** une longueur légèrement supérieure aux demi-axes de la section de la tête de manière à assurer le contact entre ces branches et le bord de la jupe après formage.

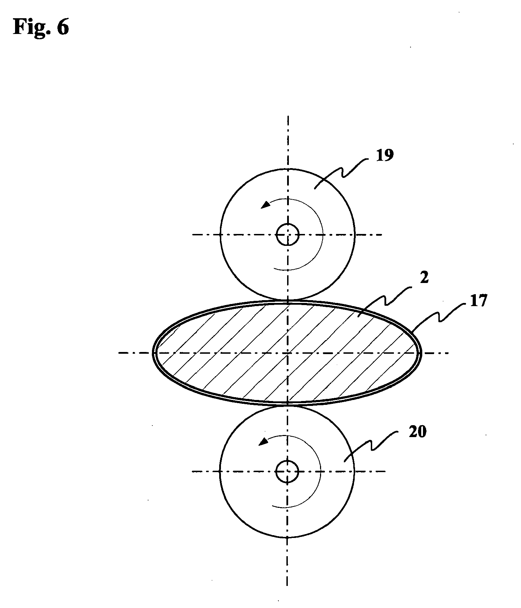

La figure 6 présente un autre exemple de partie de dispositif permettant de former des tubes laminés ovales selon l'invention. Cette partie concerne le point particulièrement critique de l'orientation de la jupe **2** sur le mandrin ovale **17**. Cette orientation est réalisée à l'aide de moyens appropriés tels que des rouleaux d'entraînements **19,** mais peut aussi être obtenue à l'aide de courroies ou de patins.

Un tube laminé ovale selon la présente invention offre l'avantage d'offrir une grande surface presque plane pouvant contenir une décoration imprimée rendant l'emballage particulièrement attractif pour le consommateur. Pour que cet effet attractif soit encore plus performant il est favorable de positionner la soudure longitudinale du laminé **7** en une zone étant peu visible par l'oeil du consommateur. Selon la présente invention il se révèle particulièrement adéquat de positionner cette soudure longitudinale dans une zone proche du rayon de courbure minimale de la tête du tube et plus précisément à une distance du grand axe de la section ovale de la jupe inférieure à $\sqrt{2} \cdot a/2$ où **a** est le demi-petit axe de la section ovale de la jupe. Pour les mêmes raisons visuelles, selon la présente invention il aussi particulièrement recommandé de positionner le recouvrement du laminé supérieur **9** et inférieur **10** dans la zone de soudage longitudinal **6** de manière à ce que la partie visible de la soudure **22** regarde en direction de la zone où le rayon de courbure de la jupe soit minimal.

La description d'un procédé et d'un dispositif pour produire un tube laminé ovale selon la présente invention apparaît de manière plus claire en présentant les différentes étapes de production :

a) A partir du rouleau de film laminé, le laminé est enroulé et soudé de manière à former un cylindre circulaire droit sans fin. Ensuite ce cylindre est découpé en jupe de longueur déterminée.

b) Les têtes de section ovale et bouchons sont automatiquement chargés dans l'appareillage de confection de tube laminé. Les têtes ovales sont positionnées à l'extrémité de mandrins de section ovales **17**.

c) Les jupes circulaires sont orientées en angle par rapport à leur axe de symétrie pour positionner l'emplacement de la soudure longitudinale **6**.

d) Les jupes circulaires préalablement orientées sont déformées en cylindre droit de section ovale et sont chargées sur les mandrins de section ovale **17** à l'aide de moyens appropriés.

e) Sur les mandrins ovales, les jupes sont à nouveau orientées de manière à les positionner de manière exacte par rapport aux têtes à l'aide de moyens appropriés.

f) Les têtes sont assemblées et soudées aux jupes.

g) Les bouchons sont vissés ou clipsés sur les têtes de tubes laminés.

Une méthode de formage de tube ovale (étape d de la méthode ci-dessus) selon l'invention et à l'aide du dispositif présenté en figure 4 et 5 comporte les étapes suivantes :

- Charger une jupe circulaire **14** sur un support concave **13**.
- Pousser la jupe circulaire **14** dans la zone de formage à l'aide d'un poussoir **11**.
- Former la jupe en cylindre ovale à l'aide des rouleaux de formage **15,16**
- tout en la poussant à l'aide du poussoir **11**. Les rouleaux de formage **15,16** sont de forme concave de manière à former la jupe selon la même forme ovale que la tête de tube **3**.
- Faire glisser la jupe ovale sur la tête ovale **3** et sur le mandrin ovale **17** à l'aide du poussoir **11**.

Pour le positionnement de cette soudure longitudinale par rapport à la tête de tube, il est possible d'orienter en angle la jupe avant son chargement sur le mandrin ovale si la jupe est encore un cylindre de section circulaire. Cette orientation peut être réalisée selon des moyens bien connus de l'homme du métier. Mais pour une orientation précise il est nécessaire de procéder à une seconde orientation lorsque la jupe est positionnée sur le mandrin ovale, car le processus de transfert et de formage ne garantit pas un maintien précis de l'orientation. Cette orientation sur mandrin ovale est particulièrement critique et selon la présente invention peut être réalisée de manière avantageuse si les moyens appropriés pour déplacer la jupe sont situés dans la zone où le rayon de courbure de la jupe est maximal. En effet les forces de frottement de la jupe sur le mandrin sont réduites lorsque le rayon de courbure est maximal.

Un autre procédé et un second dispositif pour produire un tube laminé ovale selon la présente invention est décrit à l'aide du mode opératoire ci-dessous :

h) A partir du rouleau de film laminé, le laminé est découpé en feuilles de longueur déterminée.

i) Ces feuilles sont enroulées sur un premier mandrin de section ovale et soudées de manière à former des jupes cylindriques de section ovale.

j) Les têtes de section ovale et bouchons sont automatiquement chargées dans l'appareillage de confection de tube laminé. Les têtes ovales sont positionnées à l'extrémité d'un second mandrin de section ovale **17**.

k) Les jupes ovales sont transférées sur du premier mandrin vers le deuxième mandrin de section ovale **17** à l'aide de moyens appropriés.

l) Sur les mandrins ovales, les jupes sont orientées de manière à les positionner de manière exacte par rapport aux têtes à l'aide de moyens appropriés.

m) Les têtes sont assemblées et soudées aux jupes.

n) Les bouchons sont vissés ou clipsés sur les têtes de tubes laminés.

**Revendications**

1. Emballage souple (1) de forme essentiellement tubulaire et destiné à contenir un produit semi-liquide ou pâteux qui sort sous la pression des doigts, ledit emballage comprenant une jupe (2), une tête (3) et optionnellement un bouchon (4); la jupe (2) étant formée d'une feuille enroulée et comporte une soudure longitudinale (6) formée par le recouvrement de ses bords (9,10); la tête (3) étant fixée sur le pourtour de l'une des extrémités de la jupe (7) et forme une section ovale au niveau de sa zone de fixation avec la jupe (2); ledit emballage (1)étant **caractérisé par le fait que** l'extrémité de la soudure longitudinale (6) qui est en contact avec la tête se situe à l'endroit, voire à proximité de l'endroit, où le rayon de courbure de ladite section ovale est minimal.

2. Emballage selon la revendication précédente **caractérisé par le fait que** le bord (9) de ladite feuille formant la partie supérieure de la soudure longitudinale (6) est orienté vers la zone où le rayon de courbure de ladite jupe (2) est minimal.

3. Emballage selon la revendication 1 ou 2 **caractérisé par le fait que** la jupe (2) comporte une fermeture plate (5) à son extrémité qui est opposée à celle où se situe ladite tête (3) et que ladite soudure plate (5) est parallèle à la direction du grand axe (b) de ladite section ovale.

4. Emballage selon l'une quelconque des revendications précédentes **caractérisé par le fait que** la zone de fixation jupe-tête (7) se situe dans un plan perpendiculaire à l'axe principal de la jupe (2).

5. Procédé pour la production d'emballages comprenant les étapes suivantes :

• Préparation de jupes (2) autour d'un mandrin,
• Chargement des têtes (3) sur l'extrémité d'un mandrin ovale (17) de section similaire à celle des têtes,
• Fixation des têtes (3) sur les jupes (2),

**caractérisé par le fait qu'**il est utilisé pour la production d'emballages tels que décrits dans l'une quelconque des revendications précédentes et que l'on oriente les jupes (2) en angle par rapport à leur axe de symétrie de manière à positionner la soudure longitudinale (6) à l'endroit, voire à proximité de l'endroit, où le rayon de courbure de ladite section ovale est minimal.

**6.** Procédé selon la revendication précédente comprenant les étapes successives suivantes :

• Préparation de jupes (2) autour d'un mandrin de section circulaire,
• Chargement des têtes (3) sur l'extrémité d'un mandrin ovale (17) de section similaire à celle des têtes (3),
• Déformation et transfert des jupes (2) sur le mandrin de section ovale (17),
• Fixation des têtes (3) sur les jupes (2),
• Fixation des bouchons (4) (si présents) sur les têtes (3).

**7.** Procédé selon la revendication précédente **caractérisé par le fait que** l'orientation en angle est réalisée sur les jupes (2) avant l'étape de déformation et de transfert.

**8.** Procédé selon la revendication 6 **caractérisé par le fait que** l'orientation en angle des jupes (2) est réalisée lorsqu'elles se trouvent sur le mandrin de section ovale (17).

**9.** Procédé selon l'une quelconque des revendications 6 à 8 **caractérisé par le fait que** ladite déformation est réalisée par le passage des jupes (2) dans une zone de formage (15,16).

**10.** Procédé selon la revendication 5 comprenant les étapes successives suivantes :

• Préparation de jupes (2) autour d'un mandrin de section ovale,
• Chargement des têtes (3) et bouchons (4) (si présents) sur l'extrémité d'un mandrin de section ovale (17) similaire à celle des têtes (3),
• Déplacement des jupes (2) vers les têtes (3),
• Fixation des têtes (3) sur les jupes (2).

**11.** Procédé selon la revendication précédente **caractérisé par le fait que** l'orientation en angle des jupes (2) est réalisé lorsqu'elles se trouvent sur le mandrin de section ovale (17).

**12.** Dispositif pour la fabrication d'un emballage comprenant :

- un mandrin formateur de jupe,
- des moyens pour déplacer des jupes le long dudit mandrin,
- des moyens pour charger des têtes (3),
- des moyens pour fixer les têtes (3) sur les jupes (2),

lesdits moyens pour charger les têtes (3) étant adaptés pour recevoir des têtes (3) à section ovale, **caractérisé par le fait que** le dispositif est utilisé pour la fabrication d'un emballage tel que défini dans l'une quelconque des revendications 1 à 4 et qu'il comprend des moyens (19,20) pour orienter en angle les jupes (2) préalablement à leur fixation sur les têtes (3).

**13.** Dispositif selon la revendication précédente **caractérisé par le fait que** le mandrin formateur de jupes est de section circulaire et qu'il comprend des moyens pour déformer les jupes (2) préalablement à leur fixation sur les têtes (3).

**14.** Dispositif selon la revendication précédente comprenant en outre un mandrin (17) de section similaire à celle des têtes (3).

**15.** Dispositif selon l'une quelconque des revendications 12 à 14 **caractérisé en ce que** lesdits moyens (19,20) pour orienter en angle les jupes (2) sont situés dans les zones où le rayon de courbure des jupes est maximal.

**16.** Dispositif selon la revendication 12 **caractérisé par le fait que** le mandrin formateur de jupes (2) est de section ovale.

**17.** Dispositif selon la revendication précédente **caractérisé en ce que** lesdits moyens (19,20) pour orienter en angle les jupes sont situés dans les zones où le rayon de courbure des jupes est maximal.

**Claims**

**1.** Flexible packaging (1) of essentially tubular shape and intended to contain a semi-liquid or pasty product that can be expelled under the pressure of fingers, said packaging comprising a skirt (2), a head (3) and, optionally, a cap (4); the skirt (2) being formed of a rolled-up sheet and comprises a longitudinal weld (6) formed by the overlapping of its edges (9, 10); the head (3) being fixed to the periphery of one of the ends of the skirt (7) and forms an oval cross section at the region where it is attached to the skirt (2); said packaging (1) being **characterized in that** the end of the longitudinal weld (6) that is in contact with the head lies at or near the point where the radius of curvature of said oval cross section is at its minimum.

**2.** Packaging according to the preceding claim, **char-**

**acterized in that** the edge (9) of said sheet forming the upper part of the longitudinal weld (6) is directed towards the region where the radius of curvature of said skirt (2) is at its minimum.

3. Packaging according to Claim 1 or 2, **characterized in that** the skirt (2) comprises a flat closure (5) at its opposite end to the end at which said head (3) is situated and **in that** said flat weld (5) is parallel to the direction of the major axis (b) of said oval cross section.

4. Packaging according to any one of the preceding claims, **characterized in that** the region (7) of skirt/head attachment lies in a plane perpendicular to the main axis of the skirt (2).

5. Method for producing packagings comprising the following steps:

   • preparing skirts (2) around a mandrel,
   • loading heads (3) onto the end of an oval mandrel (17) of a cross section similar to that of the heads,
   • attaching the heads (3) to the skirts (2),

   **characterized in that** it is used for producing packagings as described in any one of the preceding claims and **in that** the skirts (2) are orientated at an angle with respect to their axis of symmetry so that the longitudinal weld (6) can be positioned at or near the point where the radius of curvature of said oval cross section is at its minimum.

6. Method according to the preceding claim, comprising the following successive steps:

   • preparing skirts (2) around a mandrel of circular cross section,
   • loading heads (3) onto the end of an oval mandrel (17) of a cross section similar to that of the heads (3),
   • deforming the skirts (2) and transferring them onto the mandrel (17) of oval cross section,
   • attaching the heads (3) to the skirts (2),
   • attaching caps (4) (if any) onto the heads (3).

7. Method according to the preceding claim, **characterized in that** the skirts (2) are orientated at an angle prior to the step of deforming and transferring them.

8. Method according to Claim 6, **characterized in that** the skirts (2) are orientated at an angle while they are on the mandrel (17) of oval cross section.

9. Method according to any one of Claims 6 to 8, **characterized in that** said deformation is carried out by passing the skirts (2) through a forming zone (15, 16).

10. Method according to Claim 5, comprising the following successive steps:

    • preparing skirts (2) around a mandrel of oval cross section,
    • loading heads (3) and caps (4) (if any) onto the end of a mandrel (17) of oval cross section similar to that of the heads (3),
    • moving the skirts (2) towards the heads (3),
    • attaching the heads (3) to the skirts (2).

11. Method according to the preceding claim, **characterized in that** the skirts (2) are orientated at an angle while they are on the mandrel (17) of oval cross section.

12. Device for manufacturing a packaging comprising:

    - a skirt-forming mandrel,
    - means for moving the skirts along said mandrel,
    - means for loading heads (3),
    - means for attaching the heads (3) to the skirts (2),

    said means for loading the heads (3) being designed to accept heads (3) of oval cross section, **characterized in that** the device is used for manufacturing a packaging as defined in any one of claims 1 to 4 and **in that** it comprises means (19, 20) for orientating the skirts (2) at an angle before they are attached to the heads (3).

13. Device according to the preceding claim, **characterized in that** the skirt-forming mandrel is of circular cross section and **in that** it comprises means for deforming the skirts (2) before they are attached to the heads (3).

14. Device according to the preceding claim, further comprising a mandrel (17) of a cross section similar to that of the heads (3).

15. Device according to any one of Claims 12 to 14, **characterized in that** said means (19, 20) for orientating the skirts (2) at an angle lie in regions where the radius of curvature of the skirts is at its maximum.

16. Device according to Claim 12, **characterized in that** the mandrel for forming the skirts (2) is of oval cross section.

17. Device according to the preceding claim, **characterized in that** said means (19, 20) for orientating the skirts at an angle lie in regions where the radius of curvature of the skirts is at its maximum.

**Patentansprüche**

1. Flexible Verpackung (1), die eine im Wesentlichen röhrenförmige Form aufweist und ein halbflüssiges oder pastöses Produkt aufnehmen soll, das unter Fingerdruck austritt, wobei die Verpackung eine Schürze (2), einen Kopf (3) und wahlweise eine Kappe (4) aufweist; wobei die Schürze (2) aus einer aufgerollten Folie gebildet ist und eine Längsschweißnaht (6) aufweist, die durch Überlappen ihrer Ränder (9, 10) gebildet wird; wobei der Kopf (3) an dem Umfang einer der Enden der Schürze (2) befestigt ist und einen ovalen Querschnitt in seinem Befestigungsbereich mit der Schürze (2) bildet; wobei die Verpackung (1) **dadurch gekennzeichnet ist, dass** sich das Ende der Längsschweißnaht (6), das mit dem Kopf in Kontakt steht, an der oder in der Nähe der Stelle befindet, wo der Krümmungsradius des ovalen Querschnitts minimal ist.

2. Verpackung nach dem vorhergehenden Anspruch, **dadurch gekennzeichnet, dass** der Rand (9) der Folie, der den oberen Teil der Längsschweißnaht (6) bildet, zu dem Bereich ausgerichtet ist, wo der Krümmungsradius der Schürze (2) minimal ist.

3. Verpackung nach Anspruch 1 oder 2, **dadurch gekennzeichnet, dass** die Schürze (2) einen flachen Verschluss (5) an ihrem Ende aufweist, das dem gegenüberliegt, wo sich der Kopf (3) befindet, und dass die flache Schweißnaht (5) parallel zu der Richtung der langen Achse (b) des ovalen Querschnitts verläuft.

4. Verpackung nach einem der vorhergehenden Ansprüche, **dadurch gekennzeichnet, dass** sich der Befestigungsbereich (7) Schürze/Kopf in einer senkrecht zur Hauptachse der Schürze (2) verlaufenden Ebene befindet.

5. Verfahren zur Herstellung von Verpackungen, das die folgenden Schritte umfasst:

   - Herstellen von Schürzen (2) um einen Dorn herum,
   - Laden der Köpfe (3) auf das Ende eines ovalen Dorns (17) mit einem ähnlichen Querschnitt wie der der Köpfe,
   - Befestigen der Köpfe (3) an den Schürzen (2),

   **dadurch gekennzeichnet, dass** es zur Herstellung von Verpackungen wie in einem der vorhergehenden Ansprüche beschrieben verwendet wird und dass man die Schürzen (2) in einem Winkel zur Symmetrieachse ausrichtet, um die Längsschweißnaht (6) an der Stelle oder in der Nähe der Stelle zu positionieren, wo der Krümmungsradius des ovalen Querschnitts minimal ist.

6. Verfahren nach dem vorhergehenden Anspruch, das die folgenden Schritte umfasst:

   - Herstellen von Schürzen (2) um einen Dorn mit kreisförmigem Querschnitt herum,
   - Laden der Köpfe (3) auf das Ende eines ovalen Dorns (17) mit einem ähnlichen Querschnitt wie der der Köpfe (3),
   - Verformen und Übertragen der Schürzen (2) auf den Dorn (17) mit ovalem Querschnitt,
   - Befestigen der Köpfe (3) an den Schürzen (2),
   - Befestigen von Kappen (4) (falls vorhanden) auf den Köpfen (3).

7. Verfahren nach dem vorhergehenden Anspruch, **dadurch gekennzeichnet, dass** die Winkelausrichtung der Schürzen (2) vor dem Schritt des Verformens und Übertragens erfolgt.

8. Verfahren nach Anspruch 6, **dadurch gekennzeichnet, dass** die Winkelausrichtung der Schürzen (2) erfolgt, wenn sie sich auf dem Dorn (17) mit ovalem Querschnitt befinden.

9. Verfahren nach einem der Ansprüche 6 bis 8, **dadurch gekennzeichnet, dass** das Verformen durch das Führen der Schürzen (2) in einen Formbereich (15, 16) erfolgt.

10. Verfahren nach Anspruch 5, das die folgenden Schritte umfasst:

   - Herstellen von Schürzen (2) um einen Dorn mit ovalem Querschnitt herum,
   - Laden der Köpfe (3) und Kappen (4) (falls vorhanden) auf das Ende eines Dorns (17) mit ovalem Querschnitt ähnlich wie der der Köpfe (3),
   - Verschieben der Schürzen (2) zu den Köpfen (3),
   - Befestigen der Köpfe (3) an den Schürzen (2).

11. Verfahren nach dem vorhergehenden Anspruch, **dadurch gekennzeichnet, dass** die Winkelausrichtung der Schürzen (2) erfolgt, wenn sie sich auf dem Dorn (17) mit ovalem Querschnitt befinden.

12. Vorrichtung zur Herstellung einer Verpackung, umfassend:

   - einen Schürzenformdorn,
   - Mittel zum Verschieben der Schürzen entlang dem Dorn,
   - Mittel zum Laden der Köpfe (3),
   - Mittel zum Befestigen der Köpfe (3) an den Schürzen (2),

wobei die Mittel zum Laden der Köpfe (3) zum Empfang von Köpfen (3) mit ovalem Querschnitt ausgeführt sind,
**dadurch gekennzeichnet, dass** die Vorrichtung zur Herstellung einer Verpackung wie in einem der Ansprüche 1 bis 4 definiert verwendet wird und dass sie Mittel (19, 20) zur Winkelausrichtung der Schürzen (2) vor ihrer Befestigung an den Köpfen (3) aufweist.

13. Vorrichtung nach dem vorhergehenden Anspruch, **dadurch gekennzeichnet, dass** der Schürzenformdorn einen kreisförmigen Querschnitt aufweist und Mittel zum Verformen der Schürzen (2) vor ihrer Befestigung an den Köpfen (3) enthält.

14. Vorrichtung nach dem vorhergehenden Anspruch, die des Weiteren einen Dorn (17) mit einem ähnlichen Querschnitt wie der der Köpfe (3) aufweist.

15. Vorrichtung nach einem der Ansprüche 12 bis 14, **dadurch gekennzeichnet, dass** sich die Mittel (19, 20) zur Winkelausrichtung der Schürzen (2) in den Bereichen befinden, wo der Krümmungsradius der Schürzen maximal ist.

16. Vorrichtung nach Anspruch 12, **dadurch gekennzeichnet, dass** der Dorn zur Bildung der Schürzen (2) einen ovalen Querschnitt aufweist.

17. Vorrichtung nach dem vorhergehenden Anspruch, **dadurch gekennzeichnet, dass** sich die Mittel (19, 20) zur Winkelausrichtung der Schürzen in den Bereichen befinden, wo der Krümmungsradius der Schürzen maximal ist.

**Fig. 1**

**Fig. 2**

**Fig. 3a**

**Fig. 3b**

**Fig. 4**

A

12    14                    15

11                              3    17

13              16       17

18

A

**Fig. 5**

A-A                     15

12

16

**Fig. 6**

## RÉFÉRENCES CITÉES DANS LA DESCRIPTION

**Documents brevets cités dans la description**

- US 4123312 A, Schmid & Jeker
- FR 2856981 A
- FR 2224364 A
- US 20040016279 A
- DE 1143630 B
- FR 2702738 A